# EUROPÄISCHE PATENTSCHRIFT

(11) **EP 1 535 655 B1**
(45) Veröffentlichungstag und Bekanntmachung des Hinweises auf die Patenterteilung: **14.07.2010**
(21) Anmeldenummer: 04105863.7
(22) Anmeldetag: 18.11.2004
(51) Int. Cl.: B01D 37/02, B01D 27/08

(54) **Flüssigkeitsfilter mit Freisetzung von Additiven**
Fluid filter with release of additives
Filtre à liquide à libération d'additifs

(30) Priorität: 25.11.2003 DE 10355403
(43) Veröffentlichungstag der Anmeldung: 01.06.2005
(73) Patentinhaber: MANN+HUMMEL GmbH, 71638 Ludwigsburg (DE)
(72) Erfinder: Niemeyer, Stephan, 71711 Steinheim (DE); Wurster, Thomas, 75236 Kämpfelbach (DE); Jung, Armin, 74177 Bad Friedrichshall (DE); Schwarz, Günther, 91126 Rednitzhembach (DE)

(56) Entgegenhaltungen:
- EP-A- 0 815 916
- WO-A-03/018163
- US-A- 4 265 748

## Beschreibung

### Stand der Technik

Die Erfindung betrifft einen Filter zur Filterung von Fluiden nach dem Oberbegriff des Patentanspruchs 1. Außerdem betrifft die Erfindung ein Verfahren zur Filterung von Fluiden nach dem Oberbegriff des Patentanspruchs 9.

Die Bauteile von fluidführenden Systemen sind sehr oft durch das zu führende Fluid dem Angriff aggressiver Anteile des Fluides oder Korrosion durch das Fluid ausgesetzt. Beispielsweise sind die metallischen Bauteile von wassergekühlten Verbrennungsmotoren der Korrosion und zusätzlich Schäden durch das Gefrieren des Kühlwassers ausgesetzt. Zur Verhinderung werden dem Kühlmittel in flüssiger oder fester Form Kühlmittelzusätze zugegeben, die diese Nachteile vermeiden sollen. Die Wirkung solcher Zusätze nimmt aber über die Zeit und abhängig der Beanspruchung ab. Da aber in vielen Fluidsystemen das System als mehr oder minder geschlossenes System ausgeführt werden soll und das Fluid sowie z. B. das Kühlmittel in modernen Motoren als Lebensdauerfüllung ausgelegt ist und nur bei Schäden im Fluidsystem ausgewechselt werden soll, werden Inhibitoren in fester oder flüssiger Form verwendet, die dem Fluid zudosiert werden und somit die Funktion aufrechterhalten. Diese Inhibitoren werden einem bestimmten Intervall folgend in regelmäßigen Abständen zudosiert. Inhibitoren sind dabei Hemmstoffe bzw. Substanzen, die chemische oder physiologische Vorgänge einschränken oder verhindern. Eine Möglichkeit der Einbringung solcher Inhibitoren besteht darin, entsprechende Chemikalien in Wechselfiltern für das Fluidsystem zu integrieren. Dort lösen sich die Inhibitoren dann in definierter Zeit auf, sobald sie mit dem Fluid in Berührung kommen.

Aus der Schrift US 4,265,748 Villani et al. ist ein Filter bekannt, bei dem innerhalb eines Filtergehäuses ein separater Behälter angeordnet ist, der mit einem Deckel aus fluidlöslichem Material verschlossen ist. Kommt das fluidlösliche Material mit dem zu filternden Fluid in Kontakt, wird nur über die Öffnung im Deckel der Inhibitor mit dem Fluid in Kontakt gebracht und löst sich allmählich auf. Der im Bauraum angeordnete Behälter bleibt bestehen. Soll der Inhibitor nachgefüllt werden, so wird das Inhibitor-Material als loses Gebinde benötigt und zusätzlich ein neuer fluidlöslicher Deckel für den Behälter. Während der Handhabung des Inhibitors besteht die Gefahr, dass das Material mit dem handhabenden Personal oder der Umgebung in Kontakt kommt.

In der Schrift WO 03/018163 A1 wird ein Inhibitor zur kontrollierten Abgabe eines Additivs in einem Fluidsystem beschrieben, der in einem fluidundurchlässigen Behälter angeordnet ist und nur durch ein fluiddurchlässiges Element mit dem Fluid in Kontakt kommt. Es ist offenbart, dass dieser Behälter sowohl in einem separaten Gehäuse im Nebenstrom einer Fluidleitung als auch direkt in einem Fluidfiltergehäuse angeordnet sein kann. Das Additiv kann als flüssiges Gel, als Paste oder als feste Partikel wie z.B. Tabletten in dem Behälter vorliegen.

Die EP 0 815 916 zeigt einen Kühlmittelfilter mit einer Vorrichtung zum langsamen Freisetzen von Additiven. Hierbei ist ein Kühlmittelwechselfilter mit einem Einlass und einem Auslass und einem darin angeordneten Rundfilterelement offenbart, wobei im hohlzylindrischen Innenraum des Rundfilterelementes das zusätzliche Kühlmittel additiv in Form von Feststofftabletten angeordnet ist und eine Vorrichtung zur langsamen Freisetzung des Additivs zwischen Additiv und Auslass angeordnet ist. Der Nachteil der beim Stand der Technik bekannten Fluidfilter mit integrierten Inhibitoren ist, dass bei der Handhabung dieser Filter bis zum Einsetzen, sprich beim Fertigen der Filter bis zum Einsetzen durch einen Mechaniker, erhöhte Vorsichtsmaßnahmen im Umgang mit dem Filter vorgeschrieben sind. In der Regel wirken derartige Inhibitoren bei Hautkontakt oder beim Einatmen toxisch, weswegen bei der Handhabung mit Handschuhen und Atemschutz gearbeitet werden muss. Da der Filter aus funktionstechnischen Gründen nach der Komplettierung noch Öffnungen mit direktem Zugang zum Inhibitor aufweist, können beim Umgang mit den Filtern Staub- oder Bruchstücke herausfallen, weswegen sehr hohe Sicherheitsbestimmungen vorgeschrieben sind.

Ein weiterer Nachteil ist, dass der Inhibitor in derartigen Filtern nicht in flüssiger oder gelartiger Form in den Filter eingebracht werden kann, da die Flüssigkeit oder das Gel beim Umgang mit den Filtern herausfließen kann.

Aufgabe der Erfindung ist es, die oben genannten Nachteile zu vermeiden und einen Filter mit integriertem Inhibitor zu schaffen, bei dem der Inhibitor nicht mit den handhabenden Personen in Kontakt kommen kann. Eine weitere Aufgabe ist die Handhabung des Verfahrens zur Filterung von Fluiden mit einem derartigen Fluidfilter. Diese Aufgaben werden durch die Merkmale der Patentansprüche 1 und 9 gelöst.

### Vorteile der Erfindung

Der erfindungsgemäße Filter zur Filterung von Fluiden, insbesondere Kühlmittelfilter, weist ein Filtergehäuse mit wenigstens einem Fluideinlass und wenigstens einem Fluidauslass und ein zwischen Ein- und Auslass dichtend angeordnetes Filterelement auf. Dabei trennt das Filterelement eine Roh- von einer Reinseite. Zusätzlich ist im Gehäuse ein Inhibitor angeordnet, welcher sich unter Wirkstoffabgabe bei Kontakt mit dem Fluid zersetzt. Der Inhibitor kann hierbei in fester, flüssiger oder gelartiger Form auftreten. Das Gehäuse hat bevorzugt eine im Wesentlichen zylindrische Form; es sind jedoch auch ovale oder eckige Gehäuseformen und Bauweisen denkbar, ohne eine Einschränkung der Filtrierung zu erhalten. Damit der Inhibitor bei der Handhabung des Filters nicht mit der Umwelt, insbesondere nicht mit den handhabenden Personen in Haut- oder Atemkontakt gerät, ist er dicht mit einem fluidlöslichen Material verschlossen, welches sich beim Kontakt mit dem zu filternden Fluid auflöst. Dabei zersetzt sich die dichte Umhüllung des Inhibitors, und der Inhibitor gerät ebenfalls in Kontakt mit dem zu filternden Fluid. Sobald dieses erfolgt, zersetzt sich der Inhibitor ebenfalls und gibt die Wirkstoffe an das Fluid frei. Auf diese Art und Weise kann die Handhabung des Filters sehr stark vereinfacht werden, da so kein Haut- oder Lungenkontakt mit dem Inhibitor eintreten kann und weitaus geringere Sicherheitsbestimmungen angewendet werden können. Dies es ergibt ebenso einen deutlichen Vorteil bei den Herstellungskosten eines solchen Filters, da die Einhaltung der strengen Sicherheitsbestimmungen mit einem hohen finanziellen Aufwand verbunden ist. Ebenso ist es so möglich, flüssige oder gelförmige Inhibitoren zu verwenden, welche - da sie dicht mit dem fluidlöslichen Material eingeschlossen oder ummantelt sind - auch erst in dem zu filternden Fluidkreislauf freigegeben werden.

Gemäß einer vorteilhaften Ausgestaltung der Erfindung ist das Filterelement ein zickzackförmig gefaltetes Rundfilterelement, wie es im Stand der Technik mehrfach bekannt und angewendet ist. Der Inhibitor ist im Inneren des Rundfilterelementes angeordnet. Dabei wird der Filter bevorzugt von außen nach innen durchströmt, wobei sich also der Inhibitor auf der Reinseite des Filterelementes befindet. Allerdings ist es ebenso möglich, dass Filterelement von innen nach außen durchströmen zu lassen. Die Durchströmrichtung hängt stark von den Gegebenheiten des Fluidsystems ab. Vorteilhaft ist hierbei, dass auch ältere Filter - seien es nicht öffenbare Wechselfilter oder öffenbare Filter, bei denen das Filterelement gewechselt werden kann - mit einem Inhibitor nachgerüstet werden können. Es werden keine zusätzlichen Bauräume oder Kammern benötigt, so dass die Integration ohne weitere Kosten durchgeführt werden kann.

In vorteilhafter Weise ist das fluidlösliche Material ein Polyvinylalkohol in Folienform, welches sich bei Kontakt mit Wasser rückstandsfrei auflöst. Diese Polyvinylfolie lässt sich sehr einfach handhaben, so dass das dichte Einlagern des Inhibitors einfach über ein Verschweißen der Folie vorzunehmen ist. Bei der Verwendung von flüssigen oder gelartigen Inhibitoren ist es über die Auswahl der chemischen Zusammensetzung des fluidlöslichen Materials möglich, ein Fluid in diesem Material einzuschweißen, ohne dass das Material durch das eingeschweißte Fluid von innen zersetzt wird.

In vorteilhafter Weise ist der Inhibitor in einem festen Aggregatzustand in die Folie eingeschweißt, so dass die Handhabung sehr einfach ist. Der Inhibitor kann hierbei z. B. Tabletten- oder Würfelform aufweisen, wobei es jedoch genauso möglich ist, den Inhibitor in fester, pulvriger Form in die Folie einzubringen.

Alternativ ist es, wie gesagt, möglich, den Inhibitor in einem flüssigen oder gelartigen Aggregatzustand zu verwenden. Dabei ist eben nur darauf zu achten, dass das fluidlösliche Material von dem zu filternden Fluid gelöst werden kann und durch den flüssigen oder gelartigen Inhibitor nicht angegriffen wird.

Gemäß einer Ausgestaltung der Erfindung ist es möglich, über die Dicke des fluidlöslichen Materials den Zeitpunkt des Beginns der Wirkstoffabgabe des Inhibitors einzustellen. In manchen Fällen ist es notwendig, dass der Inhibitor erst nach einer gewissen vorgegebenen Zeit mit dem zu filternden Fluid in Kontakt kommt und seine Wirkstoffe freisetzt. Dann ist es möglich, über die Materialstärke des fluidlöslichen Materials einen gewissen Zeitversatz zwischen Fluidkontakt mit dem fluidlöslichen Material und Fluidkontakt mit dem Inhibitor zu schaffen. Je dicker die fluidlösliche Materialschicht ist, desto länger dauert der Auflösevorgang.

Gemäß einer vorteilhaften Ausgestaltung der Erfindung ist das Filtergehäuse nicht öffenbar, und der Filter ist als Wechselfilter ausgeführt. Da der Filterwechsel sowieso nach einem bestimmten Wechselintervall durchgeführt werden sollte, kann so jedesmal der Schutz durch den integrierten Inhibitor ebenfalls aufgefrischt werden. Da das Filtergehäuse nicht öffenbar ist, wird so auch ein unbeabsichtigter Kontakt mit dem Inhibitor vermieden.

Alternativ ist es natürlich ebenso möglich, das Gehäuse öffenbar auszulegen und nur das Filterelement zu wechseln. Hierbei kann das Gehäuse als eine Art Modul in das Fluidsystem integriert sein oder an das Fluidsystem angeflanscht sein. So ist es beispielsweise möglich, den Inhibitor nur bei jedem zweiten Filterelementwechsel hinzuzufügen oder die Menge des Inhibitors den Wechselintervallen anzupassen. Der Inhibitor kann hierbei als eingeschweißtes Päckchen von Hand in das Filterelement eingeführt werden, oder es besteht auch die Möglichkeit, den Inhibitor schon fest im Inneren des Filterelements zu integrieren.

Das Verfahren zur Wirkstoffbeigabe zu einem Fluid in einen oben beschriebenen Filter gliedert sich in folgende Schritte: Zuerst wird der Wirkstoff in Form eines Inhibitors in einer fluidlöslichen Folie dicht eingeschlossen, wobei darauf zu achten ist, dass die fluidlösliche Folie nur durch das zu filternde Fluid aufgelöst werden kann. Der Inhibitor kann hierbei wie beschrieben in einer festen, flüssigen oder gelartigen Form vorliegen. Im zweiten Schritt wird der so eingeschlossene Inhibitor in den hohlzylindrischen Innenraum des Filterelements eingelegt, das Filterelement wird daraufhin im Filtergehäuse eingesetzt und das Filtergehäuse danach verschlossen, wobei selbstverständlich Ein- und Auslass des Filters offen bleiben. Hier ist der Vorteil, dass die Schritte des Zusammenbaus des Filters nicht die Gefahr eines Kontaktes mit dem Inhibitor beinhalten. Im nächsten Schritt wird der Filter in den Fluidkreislauf, insbesondere einen Kühlmittelkreislauf einer Brennkraftmaschine, eingebracht, wobei das Fluid durch den Einlass einströmt, das Rundfilterelement von innen nach außen durchströmt und auf dem Weg zum Auslass den Innenraum des hohlzylindrischen Filters mit dem darin angeordneten Inhibitor füllt. Auch hier besteht bei der Montage des Filters nicht das Problem, mit dem Inhibitor auf irgendeine Art und Weise in Kontakt zu kommen. Nach dem Kontakt der fluidlöslichen Folie mit dem zu filternden Fluid löst sich die Folie rückstandsfrei auf, so dass auch keinerlei Verstopfungen des Filters oder des Auslasses auftreten können, und der Inhibitor kommt daraufhin ebenfalls in Kontakt mit dem gefilterten Fluid. Dabei zersetzt sich der Inhibitor unter Abgabe der Wirkstoffe in das Fluid.

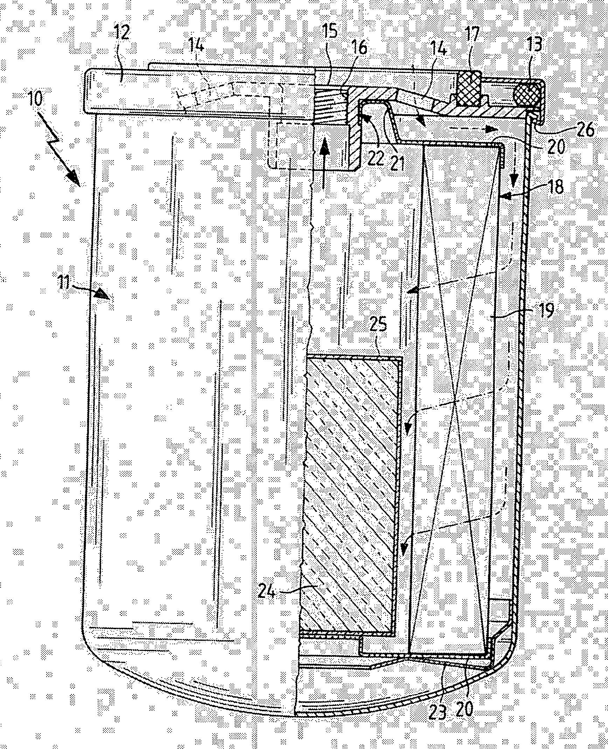

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt die Figur einen schematischen Halbschnitt durch den erfindungsgemäßen Filter.

Die Figur zeigt einen Halbschnitt durch den erfindungsgemäßen Filter in einer schematischen Ansicht. Dargestellt ist ein Fluidfilter 10, aufweisend ein Gehäuse 11, welcher durch einen Deckel 12 verschlossen ist. Im Kontaktbereich zwischen zylindrischem Deckel 12 und zylinderförmigen Gehäuse 11 ist eine Dichtung 13 angeordnet, wobei Deckel 12 und Gehäuse 11 über eine Verbördelung 26 miteinander verbunden sind. Der Deckel 12 weist mehrere Einlassöffnungen 14 auf, welche jede für sich bevorzugt kreisförmig sind und welche ringförmig konzentrisch angelegt sind. Fakultativ ist es möglich, die Einlassöffnungen 14 mit einer einteiligen Rücklaufsperre auf Silikonbasis auszustatten, dies kann bei bestimmten Einbausituationen notwendig sein. In der Mitte des Deckels 12 ist eine Auslassöffnung 15 angeordnet, wobei diese ein Innengewinde 16 aufweist. Über das Innengewinde 16 wird dieser Fluidfilter 10, welcher ein Wechselfilter ist, an das Fluidsystem angeschraubt. Zur Abdichtung zwischen Fluidfilter 10 und dem hier nicht dargestellten Fluidsystem ist im Deckel 12 in einer axialen umlaufenden Nut eine Rechteckdichtung 17 angeordnet, welche für eine axiale Abdichtung sorgt. Im Inneren des Gehäuses 11 ist ein Filterelement 18 angeordnet, welches ein Filtermedium 19 und zwei Endscheiben 20 aufweist. Das Filtermedium 19 ist hierbei bevorzugt ein sternförmig gefaltetes Filterpapier. Die Endscheiben 20 sind dabei an den Stirnseiten des Filtermediums 19 angeordnet, wobei die dem Auslass 15 zugewandte Endscheibe 20 einen wulstförmigen Kragen 21 aufweist, welcher eine Radialdichtung 22 zur dichten Trennung von Einlass 14 und Auslass 15 aufweist. Die Radialdichtung 22 ist einstückig in dem wulstförmigen Kragen 21 der oberen Endscheibe 20 ausgebildet. Zur axialen Fixierung des Filterelementes 18 ist im unteren Bereich zwischen Innenwand des Gehäuses 11 und Unterseite der unteren Endscheibe 20 ein Federelement 23 angeordnet, welches das Filterelement 18 gegenüber dem Deckel 12 verspannt. Im Innenraum des hohlzylindrisch ausgeformten Filterelementes 18 ist ein Inhibitor 24 als kreisringförmiger Block angeordnet. Dieser Inhibitor kann jedoch jede gewünschte Form aufweisen, sofern er in das Innenvolumen des hohlzylindrischen Filterelementes 18 hineinpasst. Hierbei liegt der Inhibitor 24 auf der unteren, geschlossenen Endscheibe 20 auf. Der Inhibitor 24 ist luftdicht von einer fluidlöslichen Folie 25 vollständig ummantelt, um so eine nichtbestimmungsgemäße Freigabe an die Umgebungsluft des Inhibitorstoffes zu verhindern. Der Inhibitor 24 wird vor dem Zusammenbau des Filterelementes 18 in das Innenvolumen des hohlzylindrischen Filtermediums 19 eingebracht, woraufhin im nachfolgenden Schritt die beiden Endscheiben 20 nicht lösbar mit dem Filtermedium 19 verbunden werden. Wie zu erkennen ist, ist es so möglich, auch bestehende, herkömmliche Wechselfilterpatronen im laufenden Fertigungsprozess mit dem Inhibitor auszustatten, ohne dass zusätzliche Anforderungen an die Sicherheit der verarbeitenden Mitarbeiter gestellt werden müssen.

## Patentansprüche

1. Filter zur Filterung von Fluiden, insbesondere Kühlmittelfilter, aufweisend ein Filtergehäuse (11) mit wenigstens einem Fluideinlass (14) und wenigstens einem Fluidauslass (15), ein Filterelement (18), welches dichtend zwischen Ein- und Auslass angeordnet ist, wobei das Filterelement (18) eine Roh- von einer Reinseite trennt, und einen im Gehäuse (11) angeordneten Inhibitor (24), welcher sich unter Wirkstoffabgabe im Fluid zersetzt, **dadurch gekennzeichnet, dass** der Inhibitor (24) luftdicht mit einer Folie (25) verschlossen und vollständig ummantelt ist, welche sich beim Kontakt mit dem zu filternden Fluid auflöst.

2. Filter nach Anspruch 1, **dadurch gekennzeichnet, dass** das Filterelement (18) ein zickzackförmig gefaltetes Rundfilterelement ist und der Inhibitor (24) im Inneren des Rundfilterelementes angeordnet ist.

3. Filter nach einem der vorhergehenden Ansprüche, **dadurch gekennzeichnet, dass** das fluidlösliche Material ein Polyvinylalkohol in Folienform ist, wobei der Inhibitor (24) in diese Folie (25) eingeschweißt ist.

4. Filter nach Anspruch 3, **dadurch gekennzeichnet, dass** der Inhibitor (24) in festem Aggregatzustand in die Folie (25) eingeschweißt ist.

5. Filter nach Anspruch 3, **dadurch gekennzeichnet, dass** der Inhibitor (24) einen flüssigen oder gelartigen Aggregatzustand hat.

6. Filter nach einem der vorhergehenden Ansprüche, **dadurch gekennzeichnet, dass** über die Dicke des fluidlöslichen Materials der Zeitpunkt des Beginns der Wirkstoffgabe des Inhibitors (24) einstellbar ist.

7. Filter nach einem der vorhergehenden Ansprüche, **dadurch gekennzeichnet, dass** das Gehäuse (11) nicht öffenbar ist und der Filter (10) ein Wechselfilter ist.

8. Filter nach einem der Ansprüche 1 bis 6, **dadurch gekennzeichnet, dass** das Gehäuse (11) öffenbar ist und das Filterelement (18) wechselbar ist, wobei bei Bedarf ein neuer Inhibitor (24) hinzufügbar ist.

9. Verfahren bei dem eine Wirkstoffbeigabe zu einem Fluid in einem Filter (10) nach einem der Ansprüche 2 bis 8 mit einem eingeschlossenen Inhibitor (24) erfolgt, wobei der eingeschlossene Inhibitor (24) in den hohlzylindrischen Innenraum des Filterelementes (18) eingelegt wird, der Filter (10) daraufhin verschlossen und in den Fluidkreislauf, insbesondere Kühlmittelkreislauf einer Brennkraftmaschine, eingebracht wird, wobei sich eine fluidlösliche Folie (25) beim Kontakt mit dem zu filternden Fluid rückstandsfrei auflöst und sich der Inhibitor (24) daraufhin ebenfalls durch den anschließenden Kontakt mit dem Fluid unter Abgabe der Wirkstoffe in das Fluid auflöst, wobei der Wirkstoff des Inhibitors (24) in der Folie (25) luftdicht eingeschlossen und vollständig ummantelt wird.

## Claims

1. Filter for filtering fluids, in particular coolant filters, featuring a filter housing (11) with at least one fluid inlet (14) and at least one fluid outlet (15), a filter element (18) which is disposed sealingly between inlet and outlet, the filter element (18) separating an entry side from a clean side, and an inhibitor (24) disposed in the housing (11) which is disintegrated by the release of an active substance in the fluid, **characterized in that** the inhibitor (24) is closed air-tight and completely covered with a foil (25) which is disintegrated when coming into contact with the fluid to be filtered.

2. Filter according to claim 1, **characterized in that** the filter element (18) is a fanfold round filter element and that the inhibitor (24) is disposed in the interior of the round filter element.

3. Filter according to one of above-mentioned the claims, **characterized in that** the fluid-soluble material is a polyvinyl alcohol in foil form, the inhibitor (24) being shrink-wrapped in this foil (25).

4. Filter according to claim 3, **characterized in that** the inhibitor (24) is shrink-wrapped in the foil (25) in solid state.

5. Filter according to claim 3, **characterized in that** the inhibitor (24) has a liquid or gel-like state.

6. Filter according to one of the above-mentioned claims, **characterized in that** the starting time of the addition of the active substance of the inhibitor (24) can be adjusted via the thickness of the fluid-soluble material.

7. Filter according to one of the above-mentioned claims, **characterized in that** the housing (11) cannot be opened and that the filter (10) is a spin-on filter.

8. Filter according to one of the claims 1 to 6, **characterized in that** the housing (11) can be opened and that the filter element (18) can be replaced, a new inhibitor (24) being capable to be added, if required.

9. Method for adding an active substance to a fluid in a filter (10) according to one of the claims 2 to 8 with an enclosed inhibitor (24), the enclosed inhibitor (24) being placed into the hollow cylindrical interior area of the filter element (18), the filter (10) then being closed and introduced into the fluid circuit, in particular into the coolant circuit of an internal combustion engine, a fluid-soluble foil (25) disintegrating residue-free when coming into contact with the fluid to be filtered and the inhibitor (24) then disintegrating also by coming into contact with the fluid when the active substance is released into the fluid, the active substance of the inhibitor (24) being enclosed air-tight in the foil and covered completely.

## Revendications

1. Filtre pour la filtration de fluides, en particulier filtre pour liquides de refroidissement, présentant un boîtier de filtre (11) avec au moins une entrée de fluide (14) et au moins une sortie de fluide (15), un élément filtrant (18) disposé de façon étanche entre l'entrée et la sortie, l'élément filtrant (18) séparant un côté brut d'un côté pur, et un inhibiteur (24) disposé dans le boîtier (11), lequel se décompose lors de l'addition d'un agent actif dans le fluide, **caractérisé en ce que** l'inhibiteur (24) est fermé de manière hermétique à l'air et totalement enrobé avec un film (25) qui se dissout au contact avec le fluide à filtrer.

2. Filtre selon la revendication 1, **caractérisé en ce que** l'élément filtrant (18) est un élément filtrant rond plié en forme d'accordéon et que l'inhibiteur (24) est disposé à l'intérieur de l'élément filtrant rond.

3. Filtre selon l'une des revendications précédentes, **caractérisé en ce que** le matériau soluble au fluide est un alcool polyvinyle sous forme de film, l'inhibiteur (24) étant scellé dans ce film (25).

4. Filtre selon la revendication 3, **caractérisé en ce que** l'inhibiteur (24) est scellé à l'état solide dans le film (25).

5. Filtre selon la revendication 3, **caractérisé en ce que** l'inhibiteur (24) est un liquide ou un gel.

6. Filtre selon l'une des revendications précédentes, **caractérisé en ce que** le moment du début de l'addition de l'agent actif de l'inhibiteur (24) est réglable par l'intermédiaire de l'épaisseur du matériau soluble au fluide.

7. Filtre selon l'une des revendications précédentes, **caractérisé en ce que** le boîtier de filtre (11) ne peut pas être ouvert et que le filtre (10) est un filtre à cartouche remplaçable.

8. Filtre selon l'une des revendications 1 à 6, **caractérisé en ce que** le boîtier (11) peut être ouvert et que l'élément filtrant (18) est échangeable, un nouvel inhibiteur (24) pouvant être ajouté si besoin est.

9. Procédé selon lequel est opéré un ajout d'agent actif à un fluide dans un filtre (10) selon l'une des revendications 2 à 8 avec un inhibiteur inclus (24), l'inhibiteur inclus (24) étant inséré dans l'intérieur cylindrique creux de l'élément filtrant (18), le filtre (10) étant ensuite fermé et placé dans le circuit de fluide, notamment le circuit de liquide de refroidissement d'un moteur à combustion interne, un film (25) soluble au fluide se dissolvant sans résidu au contact avec le fluide à filtrer et l'inhibiteur (24) se dissolvant par la suite également dans le fluide, par addition de l'agent actif, au contact consécutif du fluide, l'agent actif de l'inhibiteur (24) étant fermé de manière hermétique à l'air et totalement enrobé dans le film (25).
